Europäisches Patentamt

European Patent Office

Office européen des brevets

(11) Publication number: 0 372 779
A2

## (12) EUROPEAN PATENT APPLICATION

(21) Application number: 89312293.7

(22) Date of filing: 27.11.89

(51) Int. Cl.5: G06F 12/10

(30) Priority: 05.12.88 US 279734

(43) Date of publication of application:
13.06.90 Bulletin 90/24

(84) Designated Contracting States:
DE FR GB

(71) Applicant: International Business Machines
Corporation
Old Orchard Road
Armonk, N.Y. 10504(US)

(72) Inventor: Chang, Albert
10610 Morado Circle Apt.2604
Austin Texas 78759(US)
Inventor: Rogers, Mark Douglass
3101 Shoreline Apt. 333
Austin Texas 78728(US)

(74) Representative: Blakemore, Frederick Norman
IBM United Kingdom Limited Intellectual
Property Department Hursley Park
Winchester Hampshire SO21 2JN(GB)

(54) Bulk storage access using external page tables.

(57) Multiple external page table (XPT) structure geometries provide efficient organisation and management of paged, segmented virtual memory systems. First and second small XPT geometries are provided for file mapping of files of a predetermined size for code segments, and file mapping of files exceeding the predetermined size for process private segments, respectively. A large XPT geometry is for working storage segments containing shared library routines. A uniform addressing scheme accesses page state information for second small and large XPT geometries having root blocks. Selected XPT structure direct blocks are pre-allocated for large XPT structures for address ranges to be referenced to reduce page faults.

FIG. 5

## BULK STORAGE ACCESS USING EXTERNAL PAGE TABLES

This invention relates to virtual memory in computer systems and, more particularly, to efficient memory organisation and management in systems having large amounts of such memory.

In operating systems supporting paged, segmented virtual memory, such as the advanced interactive executive or AIXTM system of the IBM Corporation, it is very desirable for the paging system or pager to deal with direct access storage devices or DASD, such as disks having large storage capacities. In addition to permitting users to have substantial amounts of locally attached DASD, such operating systems enable computer systems to function in a distributed network as a file or code server with much data stored centrally therein.

A traditional problem with paging systems in supporting large amounts of DASD is that internal control structures tend to become quite large, thus taking up a lot of virtual memory. Moreover, access to these control structures tends to be less efficient the larger they become. Thus, a system and method was highly sought after which provided a space-efficient and high performance way for a pager to manage virtual memory across large as well as small amounts of DASD.

One approach to the problem was to provide for a linear or sequential memory space. Whereas this in turn provided opportunities for memory compaction, difficult performance problems were presented in searching the memory, i.e., it was more difficult addressing the memory to find the appropriate page tables and the like, or, in the alternative, additional data structure was required to facilitate such searching with resulting increases in overhead.

As an alternative approach, memory systems could provide for external page tables of a universal and substantially large size thereby facilitating implementation of relatively less complex addressing schemes providing for direct addressing. However, such schemes were not amenable to compact encoding and comparatively would result in use of substantially more memory. Accordingly, from the foregoing it is readily apparent that a system and method was highly desired for enabling a pager to manage virtual memory across large as well as small amounts of DASD in a space-efficient and high performance manner providing for direct addressability as well as saving of substantial amounts of storage.

The present invention provides a paged, segmented virtual memory computer system including extensive external bulk storage - DASD - and incorporating a storage manager for accessing such DASD in large as well as small amounts, the storage manager being arranged to maintain plural external page tables - XPTs - to translate virtual system addresses into real DASD identities, at least some of the XPTs being of an inherently different size and structure - at least one small XPT structure and a large XPT structure - to the remainder and dedicated to particular species of access - e.g., for mapped files and working storage using substantially larger amounts of memory.

The present invention also provides a method of access in such a system.

One form of such an arrangement is disclosed hereinafter by way of example in which a multiple structure geometry for external page table organisation and management is provided for use in a paged, segmented virtual memory computer system for accessing large as well as small amounts DASD. Memory usage and performance are optimised while providing full support in the paging system for mapped files and working storage using substantially larger amounts of memory.

An LVM subsystem of the operating system interfaces and manages different types of DASD in the system via logical volumes addressed by a LVID and offset. The pager interfaces with the LVM to do paging I/O, storing an LVID and offset for each virtual page in XPT data structures.

An SCB is provided for each segment defined to the system containing software information global to the segment. Each segment has an XPT structure associated with it anchored in its SCB. For each XPT structure there is one XPT entry for each virtual page in the corresponding segment.

Multiple geometry XPT structures are provided with small and large XPT structures having one and two word entries, respectively. In small XPT structure usage, for mapped files, only one copy of a LVID is saved per segment in the SCB, not in the XPT, since in the file system a file must reside wholly within one logical volume. Relative block offsets of the file are kept on a page level basis in the XPT, however, since file system architecture dictates that files are typically discontiguous within their respective volumes. Accordingly, for file mapped segments, i.e., segments mapped to only one file, the small XPT structure is used, thereby saving memory and improving performance due to fewer page faults on the small XPT data structure than in the large structure.

Working storage segments employ large XPT structures and page mapping, with each page-mapped page having a corresponding LVID and offset in its large XPT entry. Segments created or used on execution of typical commands of the operating system are file-mapped code segments employing the small XPT structures, and page-mapped private and shared library segments which are working storage segments employing the large XPT structures.

Three different XPT structure geometries are provided to efficiently support file-mapped and all other virtual storage: first and second small XPT structures, and one large XPT structure. The second small XPT structure and the large XPT structure have multiple components of a root block, and a plurality of direct blocks which contain the XPT entries. The SCB and root block contain pointers to the root block and all allocated direct blocks for the respective XPT structure, respectively.

The first small XPT structure geometry is a direct block of a plurality of XPT entries only for small files up to a predetermined size, thereby saving storage compared to the second small XPT structure for files exceeding the predetermined size.

For the large XPT structure, each direct block is divided into two parallel XPT entry arrays containing one word each. The first array contains the XPT entry word comprising the logical volume offset and page state information. The second array contains the XPT entry word comprising the LVID. Direct blocks are allocated wholly within a page whereby at most only one page fault is required to retrieve both the LVID and offset for all virtual pages represented by a single direct block.

A code segment can employ a first small XPT structure of 1/32 of page and direct block only with no root block. The XPT direct block allocation scheme provides for 128 byte direct blocks per 4Kb page whereby 32 direct blocks may be allocated within a page, i.e., only one page is required per 32 processes concurrently running small programs.

Also, a private segment can employ a 2Kb root block, with the pager also pre-allocating two direct blocks of 1Kb each. The two 1Kb direct blocks and the 2Kb root block total a 4Kb hardware page size whereby all three blocks are allocated from the same page. Such pre-allocation of direct blocks with the root block at segment creation, in enabling the pager to guarantee all three blocks residing on the same page results in the aforementioned maximum one XPT structure page fault required to resolve the original fault for references to addresses in the ranges mapped by the direct blocks. Accordingly in the preferred embodiment 1 1/32 pages is the XPT structure overhead for the majority of programs typically resulting in one XPT structure page fault on the private segment's XPT since the code segment XPT direct blocks may be allocated from the same page as other running processes.

Further, state information kept for a given segment in the SCB can indicate whether or not the XPT structure geometry includes a root block. Optimisation is provided for addressing such XPT structures having root blocks, i.e., the second small XPT structure and large XPT structure. Root blocks for each are of identical size whereas the direct blocks for the large XPT structure are twice as large due to the need for the extra LVID. A uniform addressing scheme is provided, however, for the part of the XPT structure entries containing page state information and logical volume offsets by making the first half of a large XPT structure direct block substantially identical to that of the second small XPT structure direct block by employing the aforementioned two parallel arrays. Reference to XPT structure entries to determine whether a disk address exists for a particular virtual page is also optimised by reserving a logical volume offset of zero to indicate no disk address is assigned to that page, whereby the pager refers only to the first half of the XPT structure for such indication. The pager subroutine only needs to know whether or not the segment of interest has an XPT structure geometry with a root block.

In the disclosed arrangement wherein a pager subroutine must access the LVID field in a large XPT structure entry, efficient addressing is provided wherein the pager first accesses the LVID offset and then adds a predetermined number for the address where the offset was obtained to obtain the address of the LVID.

The present invention will be described further by way of example with reference to one embodiment thereof as illustrated in the accompanying drawings in which:

Fig. 1 illustrates a small XPT structure geometry file mapped for small files;

Fig. 2 illustrates a small XPT structure geometry file mapped for large files;

Fig. 3 depicts a large XPT structure geometry for page mapping;

Fig. 4 is another block diagram illustrating the translation of an effective address to an XPT entry;

Fig. 5 is a block diagram illustrating the structure and function of a logical volume identifier (LVID);

Fig. 6 is a functional block diagram of the components of the system, illustrating the relationship of the virtual memory manager (VMM) to the system;

Fig. 7 is a block diagram depicting the translation of an effective address to a virtual address;

Fig. 8 is a block diagram illustrating the physical structure of a computer system adapted to implement memory management; and

Fig. 9 is a more detailed functional block diagram of the computer system architecture of the system depicted in Fig. 8.

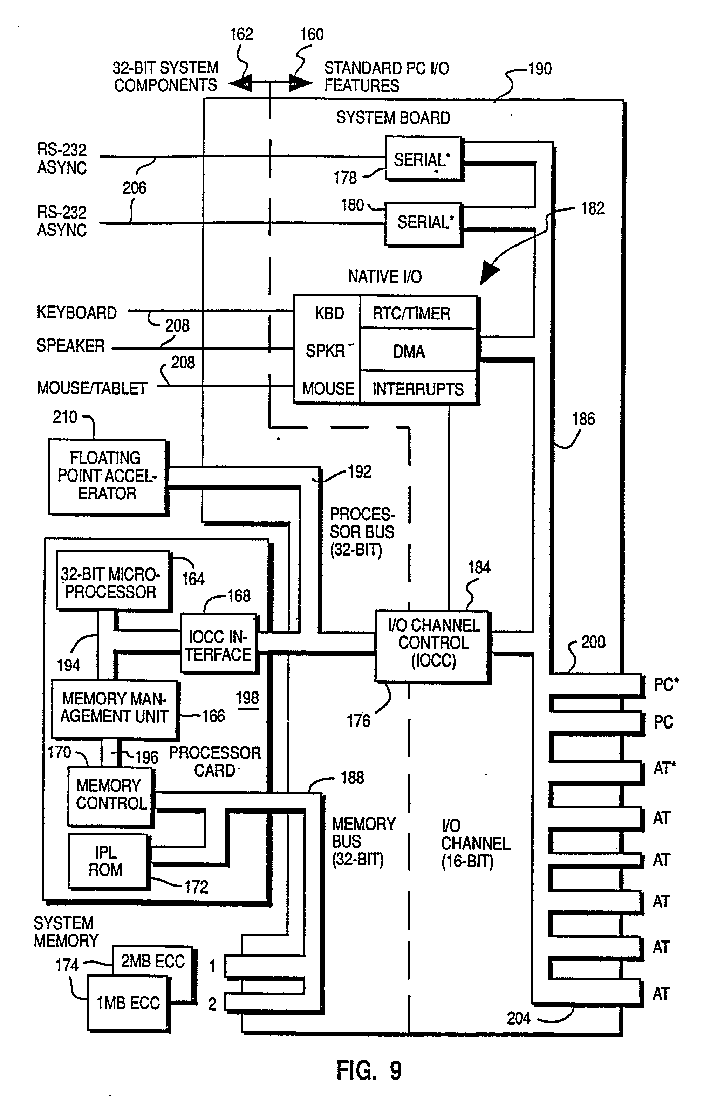

In computer operating systems such as the advanced interactive executive (AIXTM) system of the IBM Corporation, which is a system supporting paged segmented virtual memory, it is desirable for the paging system or pager to manage large capacity DASD such as disks as hereinbefore noted and shown at 156, Fig. 8. In order to provide a clear description of the selected arrangement, it is first necessary to provide background description of underlying virtual memory hardware and software subsystems which form a part of these computer systems and facilitate the pager accessing these large amounts of DASD. A detailed description of the memory management system will then be provided followed by a discussion of a representative computer system, with reference to Figs. 8 and 9, adapted to implement the management system.

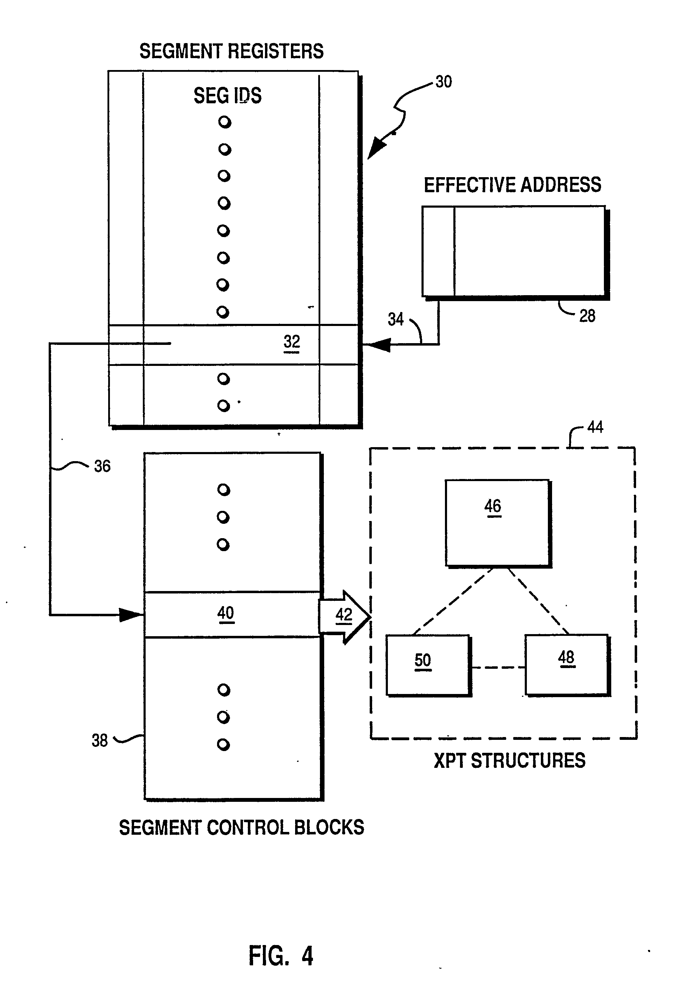

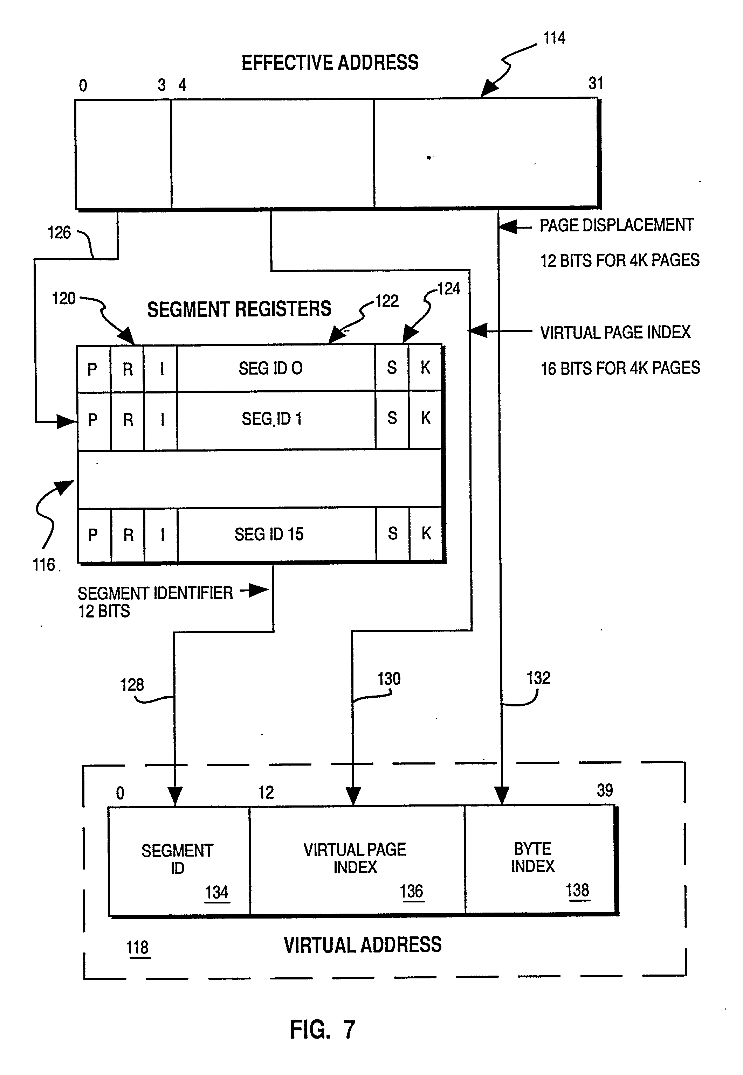

First, concerning hardware considerations of such virtual memory systems such as that shown in Fig. 9, it is conventional for such hardware to support a 32 bit word size although the invention is not intended to be so limited. A pictorial representation of such a 32 bit effective address to virtual memory may be seen at 28 and 114 of Figs. 4 and 7 respectively, which is translated to virtual address 118. The hardware further supports the notion of a segment which in the embodiment herein discussed is a 256 megabyte (Mb) partition of address space contiguous in virtual space although not necessarily contiguous in real memory. In a typical application support may be provided in the system hardware for up to $2^{12}$ different segments each with a different unique identifier known as a segment i.d. (segid). The total address space may thus be partitioned or segmented into up to $2^{12}$ different segments. The number and size of such segments and segment ids is of course, as with the word size and virtual address space size, a matter of choice and the invention is not limited to particular such numbers.

Also supported in the hardware is the notion of an inverted page table (IPT). The IPT is a page table which has one entry per real page frame, with the later being a fixed size unit of real memory of 4096 bytes (4K) for example. Each entry of the IPT contains an identifier for the virtual page of which segment that maps to that real page frame. A virtual page is a fixed size unit of virtual memory such as 4K, which may be in real memory or on disk or the like. In the typical embodiment being described herein there are $2^{16}$ 4K virtual pages per segment and of the possible $2^{12}$ segments of the system a preselected number such as 16 may be directly addressed at a given time. This is because in order to address a segment, its segid (such as 32, Fig. 4; 122, Fig. 7) must first be loaded into a segment register and typically a limited number of such registers such as 16 (shown at 30, Fig. 4 as containing respective segids) would be provided by the hardware.

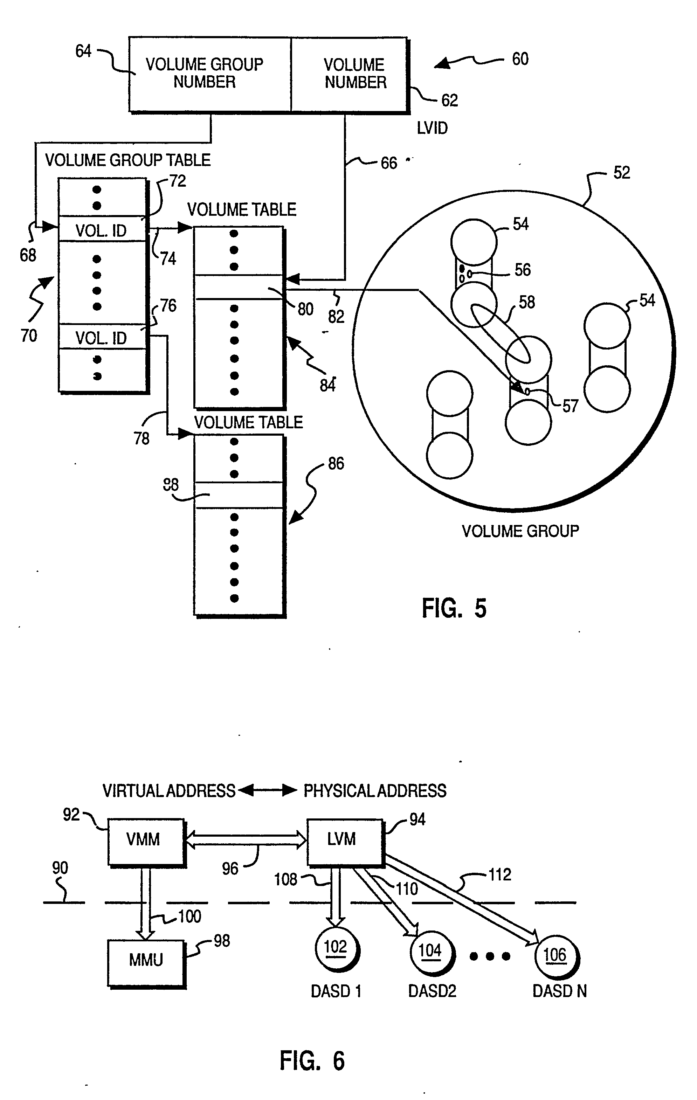

The next concept which must be described in order to gain an understanding of the selected arrangement is that of a logical volume manager. A subsystem in the operating system is referred to hereinafter as the logical volume manager (LVM) 94, Fig. 6, and is responsible for managing DASD 102 - 106, Fig. 6 in the system and providing a common interface to different types of DASD. This is achieved by means of the notion of logical volumes. A logical volume is a logically related unit of DASD which may or may not reside all on the same physical volume or device. Logical volumes may be discontiguous within a single physical volume or volumes. However the LVM hides the physical location of logical volumes and presents a homogeneous sequential interface to them. A logical volume is addressed by its logical volume identifier (LVID) (60, Fig 5; 24 and 26, Fig. 3) and a specified offset relative to 0 within it that the caller wishes to read or write. In the embodiment herein described the LVID is preferably represented by one 32 bit word. In operating systems such as the aforementioned AIXTM system, it is common practice to create numerous file systems to efficiently organise data. As an example of use of these logical volumes, it will be noted that in such operating systems one such volume may be provided for each file system of the operating system.

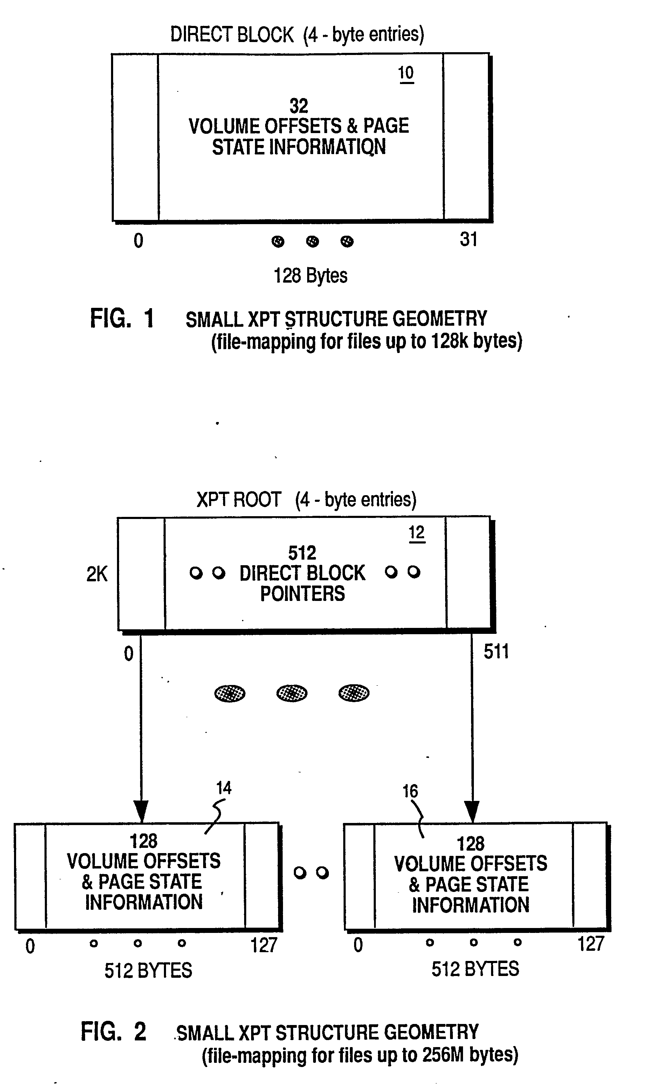

Next the concept of external page tables and paging I/O will be described. A pager interfaces with the LVM 94 to do paging I/O. In order to do so, the pager must pass an LVID 60 and some offset of the page to read or write. This implies that associated with each virtual page defined to the system that is on DASD 102 - 106 at some location, the pager must have saved a corresponding LVID 60 and offset (10, Fig. 1; 14, 16, Fig2; 20, 22, Fig. 3) within that logical volume. Since the address translation hardware supports a large total virtual address space (such as on the order of $2^{40}$ bytes), it is important to optimise memory usage for storing LVIDs 60 and offsets 10, 14, 16, 20 or 22. This is because the virtual storage required in the pager to store an LVID and offset for each virtual page becomes excessive as large amounts of virtual memory are used. For each segment defined to the system software, there is a segment control block (SCB) 40 shown collectively in Fig. 4 as 38. This block contains software information global to the segment. A data structure in which the pager retains information for virtual pages in the system is provided referred to hereinafter as the external page table (XPT). Each segment has an XPT structure, Fig. 1, 2, or 3, (also shown as 46, 48, 50 of Fig. 4) associated with it which is anchored in its SCB 40. For each such XPT structure, there is one XPT entry for each virtual page in the corresponding segment. It is important to keep these entries small since the corresponding tables can become quite large as large amounts of virtual memory are defined. In the selected arrangement, one 32 bit word, represents a logical volume offset and required state information about a virtual page. Since the LVID 60 requires yet another word, this means that the worst case XPT entry is two words, although cases are contemplated in which only one word entries are required as hereinafter described. Such an XPT structure with one word entries is hereinafter referred to as a small XPT structure, whereas an XPT structure with two word entries will be referred to as a large XPT structure.

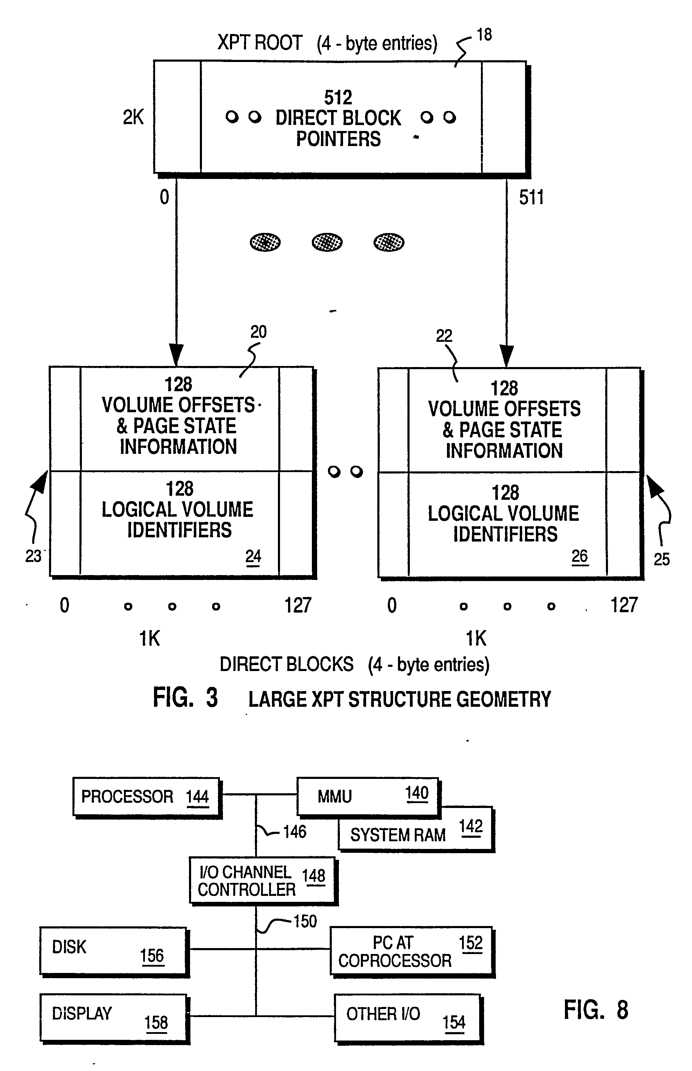

With respect to small XPT structure usage such as that associated with small XPT structure geometries of Figs. 1 and 2, the pager supports the notion of mapped files. A mapped file is a file that may be accessed via processor (164, Fig. 9) loads and stores to some well-known addresses that alias the file on disk. This mapped file concept is also known in the art as a "one level store". In order to implement mapped files efficiently in this operating system of the disclosed arrangement, it is quite convenient to use one segment per open file (except for shared libraries which are hereinafter discussed). An open file is a file wherein some process in the operating system has requested and been granted access thereto. At the time the file is opened, a paging supervisor establishes the relationship between virtual storage addresses and logical volume locations wherein the file resides. The logical volume offsets 10, 14, 16 of each relative block in the file are saved in the XPT entry for the corresponding page in the segment defined for the file. Only one copy of the LVID need be saved for the entire segment. This is due to the restriction in the file system in the embodiment herein described whereby a file must be wholly contained within one logical volume. Because of this, the LVIDs are saved in the SCBs 38 and not in the XPTs. The relative block offsets of the file must be kept on a page level basis in the XPT, however, due to the fact that the disclosed file system architecture dictates that a file may be, and typically is, discontiguous within its logical volume. This means that for file mapped segments, or segments mapped to only one file that the small XPT structures, Figs. 1 or 2, may be used. This is a significant feature of the disclosed arrangement in that by employing the small XPT structure in the manner just described, memory is saved and performance of the system improved since there will be fewer page faults on the small XPT data structures of Figs. 1 and 2 than on the large one of Fig. 3.

Next, the notion of paging space must be understood as hereinafter described. When the pager wishes to assign a real page frame to a virtual page in order to satisfy a page fault and there are no available frames left, it will pageout an in-memory virtual page to free up a page frame. The virtual page selected to be paged out must be written to paging space DASD if it has been modified since it was initially assigned. Paging space may be conceptually viewed as an extension of real memory with a slower access time. Since the pager manages paging space, it is possible to fit paging space DASD addresses into a small XPT structure. A translation is performed on a paging space DASD address from an XPT structure entry to obtain both an LVID and a logical volume offset.

It is possible for a mapped segment to page out to paging space instead of to its home location. This is known in the art as "copy on write" mapping. Even though only one LVID is kept in the SCB, a state bit is kept in the XPT which indicates whether or not a page is in paging space or still mapped to its home file system location. If it is mapped to the file system, then the LVID is obtained from the SCB. If it is mapped to paging space, then the paging space translation hereinabove noted is applied to obtain the paging space LVID and offset. The "copy on write" function is taken advantage of, for example, by the shmat() system call of the AIXTM system. Shmat() maps a data file into a segment which allows the caller to update or examine the file via loads and stores. "Copy on write" is an option to shmat() which dictates that the master copy of the file is not to be updated until explicitly committed via an fsync() system call of the AIXTM system. To achieve this, the pager simply writes all modified pages in this segment to paging space instead of back to their home file location prior to the fsync() call.

The next concept to be discussed to gain an understanding of the disclosed arrangement is the large XPT structure (Fig. 3) usage. All segments other than segments that are mapped one-to-one with a file as previously described are referred to herein as working storage segments. These segments have large XPT structures of Fig. 3 because pages in them potentially need to be read from or written to more than one logical volume other than the paging space (s). Capability exists with working storage segments to perform page mapping. Page mapping is a similar notion to the previously discussed file mapping in that it creates one level store addressability to information already residing on DASD, the difference between these notions being that page mapping is done at a page granularity rather than a segment (file) granularity. Each page-mapped page has a corresponding LVID 24, 26 and offset 20, 22 for it in its large XPT entry, unlike file mapping wherein only one LVID is required for the entire segment. The uses of these working storage segments, page mapping, and file mapping will be hereinafter described in greater detail.

The process memory model will now be described. When a command is run in a system such as the AIXTM operating system, an environment is created in which to execute that command. This includes creating a process for the command and creating segments in which to load the code to run the command. Segments created or used on execution of a typical command are as follows:

(1) a code segment which is a file-mapped segment mapping the executable program being run;

(2) a private segment which is a working storage segment containing the process's stack and data; and

(3) a shared library segment which is a working storage segment containing subroutines that may be used by different programs.

The shared library segment is not actually created upon execution of the program but rather is a global system segment to which the process will be given access if it references any of the subroutines within it.

The code segment is file mapped and consequently only needs a small XPT structure Fig. 1 or 2 resulting in a substantial performance benefit on execution of each AIXTM or similar system command. The private segment and shared library segment may perform paging I/O to or from more than one logical volume in addition to paging space. This is because of the fact that multiple files and data from different origins may be mapped into them via page mapping. A shared library to the file system such as the AIXTM system is a single file. There may be many shared libraries that a user process has access capability to. These may not all reside on the same logical volume. The way shared libraries are internally represented is to combine all of them into a virtual memory segment called a shared library segment. Each individual shared library is page-mapped into the shared library segment along with its data. Because multiple files from multiple logical volumes may be involved, a large XPT structure of Fig. 3 is needed which entails a working storage segment.

At execution time of a program when its private segment is created, the data for the program is not actually copied into the segment but rather is page-mapped into a portion of the segment. This, in itself, requires only one LVID 60 for the range of pages. However, the page may reference a subroutine in a shared library which does not reside on the same logical volume. The program must make its own copy of the read/write data for that particular shared library routine which is achieved by simply page-mapping that data copy on write. It will be noted that the program may reference many shared library subroutines in different shared libraries. Because of this, a working storage segment with its large XPT structure of Fig. 3 is needed for the process private segment.

The geometries of the XPT structures of the disclosed arrangement will now be described in greater detail. Since each command run will typically create a code segment and a private segment, and possibly address a shared library segment, it is an important feature of the disclosed arrangement to tailor the XPT structure such that the majority of programs run will pay a minimal penalty in overhead for XPTs allocated or addressed. In order to efficiently support file-mapping as well as all other virtual storage, it is an important feature of the disclosed arrangement that more than one XPT structure shape or geometry is provided and used as appropriate. In the disclosed system, three different XPT structure geometries are provided as illustrated in Figs. 1-3. Since in the embodiment under discussion all virtual memory segments are $2^{28}$ (256 Mb) and the virtual page size is 4K ($2^{12}$) bytes, this means that each segment's XPT structure must allow for up to $2^{16}$ (64K) XPT entries since there is one XPT entry per virtual page defined to the system. It is not necessary that storage for all $2^{16}$ XPT entries be allocated at once. In order to avoid reserving storage for all $2^{16}$ XPT entries unless it is actually needed, the notion of late XPT allocation is applied. Late XPT allocation implies that XPT entries are only allocated if the virtual page that they represent has been referenced or has had data mapped into it. Two of the three XPT structures (shown in Figs. 2 and 3) themselves are divided into multiple components: the root block 12 or 18, Figs. 2 or 3 respectively and, in the embodiment under discussion, up to 512 direct blocks 14 - 16, 20 - 24 through 22 - 26 of Figs 2 and 3 respectively. Direct blocks contain XPT entries themselves. The unit of dynamic allocation for an XPT structure is a direct block. Direct blocks are preferably always allocated such that they reside wholly within a page. The root block contains pointers to all allocated direct blocks for that XPT structure. The SCB such as 40 of Fig. 4 contains a pointer such as 42 to the root block of the XPT structure 44.

In the disclosed arrangement there are two different geometries employed for small XPT structures as indicated in Figs. 1 and 2. Referring first to Fig. 1, this illustrates the geometry used for small XPT structures when a file of size 128K bytes or less is mapped to the corresponding segment. This is, simply, one direct block 10 that contains 32 XPT entries. Each XPT entry contains the logical volume offset and page state information for its corresponding virtual page. The SCB 40 contains a pointer 42 to this direct block. The advantage of having a special small XPT structure for small files (on the order of 128 Kb or less) is that it saves a substantial amount of storage over the normal small XPT structure hereinafter described and shown in Fig. 2 which is employed for larger files. The direct block 10 in this case is only 128 bytes compared with 512 bytes for the normal small XPT structure of Fig. 2. Also, no root block is required thereby saving 2Kb unlike the root block 12 of Fig. 2. It will be noted that the majority of user programs run are less than or equal to 128K bytes in size. It is therefore desirable to optimise the small XPT structure geometry for the code segment into which executable files are mapped to efficiently support small files. The shmat() function, as previously described, will also work efficiently for small data files with this optimised small XPT structure of Fig. 1.

Whereas the structure in Fig. 1 is quite efficient for small files, efficient support for large files is nevertheless required. In order to support file-mapping for files of greater size than 128K bytes, an additional small XPT structure geometry is provided, see Fig. 2. The size of each direct block 14 - 16 is 512 bytes, and each contains 128 XPT entries. Also, a root block 12 is required in order to allow addressability to all direct blocks 14 - 16 that are allocated.

In operating systems such as the aforementioned AIXTM system, files are permitted to grow dynamically. If a process issues a shmat() on a file, to gain one-level store access to it, the semantics in the AIXTM or like system are that if that process issues a processor store instruction beyond the end of the file, the file is automatically extended. Because of this, when a file is initially opened if its size is less than or equal to 128Kb and it gets a single direct block 10 (shown in Fig. 1), and then later the file grows to more than 128Kb, the small XPT structure of Fig. 1 must be transformed to that of Fig. 2.

Fig. 3 illustrates the geometry used for large XPT structures of the disclosed arrangement. All working storage segments have associated with them an XPT structure as shown in Fig. 3. The size of each direct block 23 or 25 for example is 1Kb. Each direct block contains 128 XPT entries and is divided up into two parallel XPT entry arrays each containing one word. The first array 20 or 22 contains the XPT entry word which holds the logical volume offset and page state information. The second array 24 or 26 contains the XPT entry word which holds the LVID. Since direct blocks are always allocated wholly within a page, then only one page fault, at most, will be required to retrieve both the LVID and offset for all virtual pages represented by a single direct block.

The notion of pre-allocation of selected direct blocks will now be described. It is important to note the total overhead incurred from XPT structure direct block and root block allocation for the execution of a small program (equal or less than 128Kb) as a result of creating its private segment and code segment. (It will be noted that the shared library segment is not created but simply addressed at this time, so its XPT structure storage requirements are not pertinent at this point.) The code segment XPT structure requires 128 bytes or 1/32 of a page since it takes the direct block 10 from Fig. 1 only with no root block. The XPT direct block allocation scheme for 128 byte direct blocks gets a 4Kb page from the page table area or PTA (i.e., the area from which XPT blocks are allocated), and allocates 128 byte direct blocks from it until 32 direct blocks have been allocated within that page at which point another 4Kb PTA page for 128 byte direct blocks is allocated. This means that only one PTA page is required per 32 processes concurrently running small programs.

The private segment requires a root block which is 2Kb. It will be noted that in theory all that is needed is a root block at "create segment" time since direct blocks are dynamically allocated. Instead of just allocating a root block when creating a process's private segment, the pager also allocates two direct blocks such as 23 and 25 and chains them to the root block 18, Fig. 3. It requires 1Kb for each direct block allocated which, when summed together, and added to the size of the root block (2Kb) comes to 4Kb which, as previously noted, is the hardware page size. The two direct blocks and the root block are allocated such that all three are allocated from the same page. XPT direct blocks in root blocks are pageable data structures. In order to resolve a page fault, the pager needs to examine the XPT structure entry that corresponds to the page faulted on. It is undesirable to take a page fault on the XPT structure entry for the page faulted on as this, from a system view point, adds path length to the overall time required to resolve the original page fault. In order to get a large XPT structure entry, it is necessary to examine the root block first to obtain the pointer to the appropriate direct block. If the root pointer and direct block reside in different pages, this could result in up to two extra page faults required to resolve the original page fault. Pre-allocating two direct blocks along with the root block at the time the segment is created allows the pager to guarantee that all three blocks reside in the same page. Thus, for references to addresses in the ranges mapped by the direct blocks 23, 25, at most one XPT structure page fault is required to resolve the original fault.

The reason why it is possible for the pager to predict which direct blocks need to be pre-allocated is due to the way the fork() and exec() system calls work in AIXTM or similar systems. Fork() creates a new process in the AIXTM system and is responsible for creating the private segment, whereas exec() is the system call that creates the code segment. Exec() loads a program into the code segment and places the program's data starting at low addresses of the private segment. The normal sequence of events when a command is executed from the command line in the AIXTM system is that a new process is fork()'ed for the command to run in, and then an exec() follows to load the program into memory. At the end of the private segment is a kernel work area which fork() will write into immediately after creating the private segment. The two XPT direct blocks 23 and 25 pre-allocated for the private segment are assigned such that they map the first 512Kb and the last 512Kb in the segment, since fork() and exec() will immediately reference data in these parts of the segment. In summary, in the embodiment herein described 1 and 1/32 pages is the XPT structure overhead for the majority of programs. It will be noted that this will typically only result in one XPT structure page fault (on the private segment's XPT), since the code segment XPT direct blocks can be allocated from the same page as other running processes.

XPT entry addressing will now be discussed in further detail. The reason that the large XPT root block 18, Fig. 3 is defined to be 2Kb and the direct blocks 20 - 24 or 22 - 26 are 1Kb is because two direct blocks are desired upon creation of a process private segment (as indicated in the hereinabove noted discussion with reference to fork() and exec()), as well as the root block. It is desirable to keep all the XPT blocks in the same page, as also previously described herein. This in turn influences the geometry of the small XPT structure Fig. 2 for large files in excess of 128Kb for example.

The introduction of multiple XPT structure geometries of Figs. 1 - 3 introduces an extra layer of complexity to the pager in that more than one XPT structure entry addressing scheme is needed, since there is more than one XPT structure geometry. In order to reduce run-time checks in the pager, which improves performance, it is desirable to have as uniform a method for addressing XPT structure entries as possible. Since there is no root block for the small XPT structure geometry of Fig. 1 and there is a root block for the other two geometries of Figs. 2 and 3, an extra test is required in the pager to detect this. This implies that a piece of state information that tells whether or not the XPT structure geometry has a root block or not needs to be kept for the segment in the SCBs 38. An optimisation has been made for addressing the XPT structures which have root blocks as shown in Figs. 2 and 3. The root blocks 12 and 18, respectively, for each are the same size, while the direct blocks 20 - 24 or 22 - 26 for the large XPT structure (Fig. 3) are twice as big as 14 or 16 of Figs 2, necessitated because of the extra LVIDs 24, 26. A uniform addressing scheme is obtained, however, for the part of the XPT structure entries (14, 16 of Fig. 2; 20, 22 of Fig. 3) that contain page state information and logical volume offsets. This is done by making the first half 20, 22 of the large XPT Fig. 3 structure direct block to be identical to the small XPT structure direct block 14, 16 of Fig. 2, by using two parallel arrays 20 - 24 or 22 - 26 for example as previously described. This provides for substantial run-time performance benefits since the most commonly referenced data inside an XPT structure entry is the page state information.

Another common reference to XPT structure entries is to determine whether or not a disk address exists for a particular virtual page. This is optimised by reserving a logical volume offset of 0 to mean that no disk address is assigned to that virtual page. This means that the pager only needs to look at the first half of the XPT structure to determine this. The net result of the foregoing is that no extra XPT structure geometry state information need be checked if a pager subroutine already knows that the segment it is interested in has an XPT structure geometry with a root block and it only wishes to examine or set page state information or determine if the virtual page has a disk address.

For cases in which a pager subroutine does, in fact, wish to access the LVID field in a large XPT structure entry Fig. 3, the addressing scheme of the disclosed arrangement is also quite efficient. It will be noted that most code that requires access to an LVID 62 also needs to obtain the logical volume offset since the two, together, make up a complete DASD address. To obtain the LVID and logical volume offset from a large XPT structure entry of Fig. 3, the pager first accesses the logical volume offset and then adds 512 bytes to the address from where it got the logical volume offset, and gets the LVID from there. This is an efficient addressing scheme, as a single processor "add" instruction is very efficient in hardware, as opposed to more complex address computations requiring multiple adds and/or an expensive memory fetch or load.

Figs. 8 and 9 illustrate the physical structure and architecture of the disclosed arrangement, realised by adaptation of an IBM RT PC computer (RT and RT PC are trademarks of the IBM Corporation) operating with a version of the UNIX (trademark of AT&T) operating system known as the hereinbefore noted AIX operating system. However the invention is not intended to be limited to such adaptation.

For more information on the RT PC and the AIX systems, reference can be made to the following:

Bach, M.J., The Design of the UNIX Operating System, Prentice Hall, 1986.

Lang, T.G. and Mothersole, T.L., Design of the RTPC VRM Nucleus, September 1, 1986.

AIX Operating System Commands Reference, IBM Corporation, SC23-0790.

AIX Operating System Managing the AIX Operating System, IBM Corporation, SC23-0793. AIX Operating System Programming Tools and Interfaces, IBM Corporation, SC23-0789.

AIX Operating System Technical Reference, Volumes 1 and 2, IBM Corporation, SC23-0808 and SC23-0809.

IBM RT Personal Computer Technology, IBM Corporation, SA23-1057, 1986.

Virtual Resource Manager Technical Reference, Volumes 1 and 2, IBM Corporation, SC23-0816 and SC23-0817.

Figs. 4 and 7 schematically illustrate the manner in which an effective 32 bit address 28 on the memory bus 188 of Fig. 9 is translated to a virtual address such as that of address 118. The higher four bits of a given address 28 index as shown at 34 to a corresponding segid 32 of a plurality 30 of such segids. 16 of such segids 30 may be stored in corresponding ones of 16 segment registers provided in the memory management unit or MMU 166 of Fig. 9. Each such segid 32 indexes as shown at 36 into a corresponding table 38 of segment control blocks or SCBs. Thus, in the illustration of Fig. 4, the segid 32 indexes at 36 to a corresponding SCB 40, such SCBs being provided in software of the system. Thus, each segid provides a unique SCB entry of the table 38.

The particular SCB entry 40 is essentially an anchor or pointer 42 to the particular XPT 44 for that segment. State information in the SCB indicates which of the three XPT structure geometries 46, 48 or 50 (shown collectively as geometries 44 and corresponding to the geometries of Figs. 1 - 3, respectively) is used for the particular corresponding entry 40. Such entries as 40 in the table of SCBs further contain pointers to the corresponding particular XPT.

Fig. 5 illustrates the structure and function of a logical volume identifier or LVID 60. A logical volume group 52 is a set or integral number of logical volumes 54 of DASD in the form any number of devices such as optical disks, streaming tapes, or hardfiles or fixed disks, or the like. Each group 52 may in turn be divided into a plurality of partitions which may span disks if within the same volume group. Each such partition or logical volume may be assigned a unique volume number 62. In the disclosed arrangement, this volume number, which comprises the lower order 16 bits of the LVID 60 yields a possibility of $2^{16}$-1 partitions for a given group 52. As a specific example, 50 meg hardfiles 54 might be divided into a plurality of logical volumes such as 7, 15, and 10 meg volumes each with differing protection characteristics and access rights if desired. Such volumes may be schematically seen as illustrated at reference numerals 56 and 57 and may occur cn one DASD device if desired. Just as the number assigned to a particular volume or partition 57 and 62 is unique, a unique volume group number 64 will be assigned to each such group 52 which will be seen in Fig. 5 to comprise the high order 16 bits of the LVID in the embodiment under discussion. Accordingly, the LVID 60 will further be seen to be comprised of 32 bits which is concatenation of the volume group number 64 and the volume number 62 within the group, and that this LVID 60 will thereby uniquely identify a partition such as 57 or 56 within a given volume group 52.

The volume group number 64 indexes as shown at 68 into a volume group table 70 and, more particularly provides a volume ID 72. This volume ID 72, in turn, is a base address or pointer 74 to a corresponding volume table 84. The particular volume number 62 corresponding to the partition 57 to be located in the volume group 52, in like manner to the pointer 74, is a pointer 66 into the corresponding volume table 84 which in turn thereby provides a pointer 82 to the desired partition 57. Obviously a different volume group number 64 would index to a different volume ID 76 which in turn would provide the base address or pointer 78 to different volume table 86. A corresponding different volume number 62 would point to a corresponding location 88 in the volume table 86 which in turn would provide a next pointer to a different partition of a different volume group number as desired.

Referring now to Fig. 6 a functional block diagram of fundamental components of the system is shown illustrating the relationship of the virtual memory manager (VMM) 92 to the system. It will be recalled that a virtual address must be translated to a physical address in order to access physical devices such as the plurality of DASD 102 -106 shown in Fig. 6. Accordingly, the VMM 92 is provided for communicating with the LVM 94 via communication channel 96 when it is desired to access the storage 102 - 106. The LVM 94, it will be recalled, is a software interface to the DASD 102 - 106 generating the appropriate physical addresses 108 - 112 to access the corresponding DASD 102 - 106. The further function of the VMM 92 is to control MMU 98 which is also shown at 166 of Fig. 9. A dividing line 90 is intended to conceptually illustrate division between software and hardware components of the arrangement wherein generally the VMM 92 and LVM 94 comprise software components whereas the MMU 98 and DASD 102 -106 comprise hardware elements.

Still referring to Fig. 6, in operation the VMM 92 essentially comprehends architecture of the various segments. From the XPTs herein described the VMM 92 computes the LVID 62 (Fig. 5) associated with a particular portion, such as 56 or 57, of a particular segment as well as computing the offset within the volume and passes this LVID and offset to the LVM 94 via the conceptually illustrated communication channel 96. The LVM 94 it will be recalled essentially knows nothing about segments but rather physical disk addresses, LVIDs, and how to perform translations to the physical locations of desired memory on DASD 102 - 106. Accordingly, the function of the LVM 94 is to transform these LVIDs and offsets into physical disk addresses, whereas the VMM 92 in contrast takes a virtual address and converts it into an LVID. It will, of course, be noted that such conversion of virtual address to LVID and offsets and subsequent conversion into physical disk address is only required if necessary to do a disk read or write.

Fig. 7 illustrates in more detail the translation of an effective address to a virtual address which is essentially performed by the MMU 166. The effective address 114 includes four high order bits which is a pointer 126 to one of 16 segment registers 116. Each such register will contain a 12 bit segment identifier 122, and bits 120 and 124 defining access capability. Each such segment identifier 122 as indicated by 128 comprises a 12 bit segment ID 134 portion of a 40 bit virtual address 118. The effective address 114 further contains a virtual page index portion of 16 bits for 4k size pages which comprises the next 16 bits of the virtual address 118 indicated as the virtual page index 136 portion. The remaining 12 bits of the effective address 114 comprise the page displacement 132 which is 12 bits for 4k size pages and comprises the remaining 12 bits of the 40 bit virtual address 118, shown as byte index 138.

In Fig. 8 there may be seen depicted a general block diagram of the physical structure of the computer system. DASD devices will be seen therein generally represented as disk 156. The system will further include some form of display 158 and other I/O devices 154 as desired such as printers, pointing devices or the like. A processor 144 provides the processing capability required as described herein which may be supplemented as desired by a co-processor 152. The MMU 140, system RAM 142, and I/O channel controller 148 complete the structure with conventional command, address, and control lines being shown generally at 146 and 150 for purposes well known in the art in electrical interconnection of the components depicted in Fig. 8.

Referring now to Fig. 9 a functional block diagram of the system architecture is shown which supports the virtual memory management system. A 32 bit microprocessor 164 and its corresponding memory management unit (MMU) 166 hereinbefore discussed are packaged on a processor card 198. A separate 32 bit slot is provided for an optional floating point accelerator card 210 and two other dedicated slots for system memory cards 174. The Fig. 9 system preferably includes the ability to execute both PC and PC AT™ (trademark of the IBM Corporation) type programs concurrently with RT PC (registered trademark of the IBM Corporation) type programs. This is made possible by optional cards which plug into the slots 200 and/or 204 of the 16 bit I/O channel 186 such as coprocessor cards and other co-processor options which provide for faster performance with additional memory cards, math co-processor chips, and the like.

The system memory 174 is packaged on one and two megabyte cards which plug into two dedicated memory slots and provide expansion to three and four megabytes, with hardware architecture allowing for addressing up to 16 megabytes of real memory. The system of Fig. 9 combines a 32 bit microprocessor 164 and MMU 166 with the aforementioned standard 16 bit I/O channel 186. The system is partitioned by the dotted line in Fig. 9 so that the 32 bit system components to the left of the line indicated by arrow 162 operate independently from the 16 bit I/O channel 186 components shown to the right of the line by arrow 160. This approach provides both high performance 32 bit processing and compatibility with standard 16 bit I/O adapters such as those which may be connected at slots 200 and 204 to the 16 bit channel 186.

The Fig. 9 system employs the microprocessor 164 and corresponding MMU 166 packaged preferably on a processor card 198 which plugs into the system board 190. The microprocessor 164 is preferably of the type which implements a reduced instruction set computer (RISC) architecture such as one having in the particular embodiment depicted 118 instructions, 16 32 bit general-purpose registers, and a full 32 bit data flow for both addresses and data, with performance typically being in excess of 1.5 MIPs depending on the instruction mix in particular implementation.

The MMU 166 implements a previously described single level store address translation architecture which converts the 32 bit system address to a 40 bit virtual address for translation. Internal translation buffers within the MMU 166 convert the 40 bit virtual address to a 24 bit real address. Hardware is also provided in the MMU 166 to automatically reload the translation buffers from main memory pages as required. MMU 166 further contains the error correcting code (ECC) logic for system memory 174 and control logic for system memory and the IPL and power-on self test ROM 172.

In addition to the microprocessor 164 and MMU 166, the processor card 198 contains logic to adapt the 32 bit packet-switching microprocessor channel to an asynchronous 32 bit processor channel 192 connected to the optional floating point accelerator card and system board I/O channel converter or IOCC 184. A dedicated memory channel 196-188 through memory control 170 is also generated from the MMU 166 for connection to the system memory cards 174.

Clock generation for the microprocessor 164, MMU 166, and system memory 174 is provided on the processor card 198. Independent clock generation is provided on the system board 190 for I/O channel timing making it possible for higher performance processor and system memory cards to be supported without affecting I/O channel timing. The optional floating point accelerator card 210 attaches to the 32 bit processor channel 192 and provides improved performance for floating point applications. Two dedicated slots are provided for system memory 174 which attaches to the processor card 198 through the aforementioned memory channel 188. The memory channel consists of an independent 40 bit data bus and 24 bit address bus. The data bus includes 32 bits of data and 8 bits of error correcting code (ECC). The ECC allows automatic detection and correction of all single bit system memory errors and detection of all double bit errors. The 24 bit address bus is capable of addressing up to 16 megabytes of system memory as previously described.

Memory timing, control, and ECC functions are provided by the processor card 198. System memory is two-way interleaved on each memory card 174 with one bank containing even addresses and the other bank containing odd addresses. This interleaving technique combined with low access time RAM provides for relatively large system memory band width.

The system board 190 further contains all of the channel conversion functions to adapt the 32 bit storage channel 192 to a 16 bit I/O channel 186. The I/O channel support functions such as an interrupt controller, DMA controller and real time clock and timer (RTC/timer) are also provided in the native I/O block 182 on the system board 190. Timings, address interrupt and DMA assignments, and related functions of the I/O channel 192 were designed to be as compatible as possible with the 16 bit channel 186.

In addition to the channel conversion functions, the system board 190 contains a programmable translation control facility to support access from adapters on the I/O channels 192 and 186 to system memory. A separate dedicated microprocessor is provided to handle the interface 182 to the keyboard, speaker, mouse and tablet 208. The system of Fig. 9 further includes two built-in RS-232 serial ports 178, 180 with DMA capability for attaching terminals, printers, or other RS-232 Async devices 206. Further details of the various components and their functions of the system of Fig. 9 may be obtained from reference to the aforementioned "RT Personal Computer Technology" publication. Specifically, additional detail may be obtained regarding the following components at the corresponding pages of the publication which follow: microprocessor 164 and MMU 166 at page 48 and 57; processor card 198 at page 12; accelerator 210 at page 21; system memory 174 at page 18; and system board 190 and I/O channels, page 26.

## Claims

1. A paged, segmented virtual memory computer system including extensive external bulk storage - DASD - and incorporating a storage manager for accessing such DASD in large as well as small amounts, the storage manager being arranged to maintain plural external page tables - XPTs - to translate virtual system addresses into real DASD identities, at least some of the XPTs being of an inherently different size and structure - at least one small XPT structure and a large XPT structure - to the remainder and dedicated to particular species of access - e.g., for mapped files and working storage using substantially larger amounts of memory.

2. A system as claimed in claim 1, wherein the storage manager includes an LVM subsystem of the operating system which interfaces with and manages different types of DASD in the system via logical volumes addressed by a logical volume identity - LVID - and offset and a pager which interfaces with the LVM to do paging I/O, storing an LVID and offset for each virtual page in XPT data structures.

3. A system as claimed in claim 2, wherein the storage manager provides an SCB for each segment defined to the system containing software information global to the segment together with an XPT structure associated with it anchored in its SCB.

4. A system as claimed in claim 4, wherein the storage manager provides, for each XPT structure, one XPT entry for each virtual page in the corresponding segment.

5. A system as claimed in any preceding claim, wherein are provided with small and large XPT structures having one and two word entries, respectively, the small XPT structures being used for accessing mapped files, only one copy of a LVID being saved per segment in the SCB, not in the XPT, relative block offsets of the file being kept on a page level basis in the XPT.

6. A system as claimed in claim 5, wherein working storage segments are accessed via large XPT structures using page mapping, with each page-mapped page having a corresponding LVID and offset in its large XPT entry.

7. A system as claimed in either claim 5 or claim 6, wherein small XPT structures are used to access segments created or used on execution of typical commands of the operating system, these being file-mapped code segments.

8. A system as claimed in any of claims 5 to 7, wherein large XPT structures are used to access page-mapped private and shared library segments which are working storage segments.

9. A system as claimed in any preceding claim, wherein two small structures are maintained, a first small XPT structure for file mapping files up to a first predetermined size and a second small XPT structure for file mapping files exceeding the first predetermined size.

10. A system as claimed in claim 9, wherein each the large XPT structure and each second small structure XPT include a root block portion and direct block portions each comprised of a volume offset and page state information portion.

11. A system as claimed in any preceding claim, wherein the storage manager is arranged to support any one or more of the following:
pre-allocating the large XPT structure direct block portions;
pre-allocating the direct block portions and a root block portion whereby XPTs of the two direct and the root portions are on one memory page;
maintaining the direct block portion of the large XPT structure and the second small XPT structure to be of substantially identical form;
maintaining the volume offset and page state information portions of the large XPT structure and the second small XPT structure to be of substantially identical form;
providing for the direct block portions of large XPT structures to include a logical volume identifier portion;
providing for the volume offset and page state information portion and the logical volume identifier portion of the large XPT structures to be non-interleaved; and
using the first small XPT structure is for code segments, the second small XPT structure for process private segments.

12. A system as claimed in any preceding claim wherein the storage manager generates page state information which comprises a plurality of state information entries each corresponding to a logical volume identifier entry in the logical volume identifier portion and wherein the logical volume identifier entries are spaced from corresponding the state information entries by pre-selected address increments.

13. In a system as claimed in claim 12, a method for locating a portion of a virtual memory data structure associated with a corresponding virtual address comprising:
generating the state information functionally related to one of the plurality of different XPT structure geometries; and
accessing an appropriate one of the XPT structures as a function of the state information generated.

14 A method as claimed in claim 13, wherein the XPT structures are first, second and third structures, state information generation including generating first, second and third indicators corresponding to the first, second and third structures and accessing the XPT structures comprising retrieving one of the first, second or third indicators and accessing the first, second or third XPT structure in response to the retrieving of a corresponding first, second or third indicator.

DIRECT BLOCK (4 - byte entries)

<u>10</u>

**32
VOLUME OFFSETS & PAGE
STATE INFORMATIQN**

0       ⊛   ⊛   ⊛       31

128 Bytes

**FIG. 1**    SMALL XPT STRUCTURE GEOMETRY
(file-mapping for files up to 128k bytes)

XPT ROOT (4 - byte entries)

<u>12</u>

2K      O O **512
DIRECT BLOCK** O O
**POINTERS**

0                      511

14                     16

**128
VOLUME OFFSETS
& PAGE STATE
INFORMATION**     O O     **128
VOLUME OFFSETS
& PAGE STATE
INFORMATION**

0   o   o   o   127      0   o   o   o   127

512 BYTES             512 BYTES

**FIG. 2**    SMALL XPT STRUCTURE GEOMETRY
(file-mapping for files up to 256M bytes)

XPT ROOT   (4 - byte entries) ⌐ 18

2K

512
DIRECT BLOCK
POINTERS

0                                                    511

20

128
VOLUME OFFSETS
& PAGE STATE
INFORMATION

128
LOGICAL VOLUME
IDENTIFIERS

24

23

0              127

1K

22

128
VOLUME OFFSETS
& PAGE STATE
INFORMATION

128
LOGICAL VOLUME
IDENTIFIERS

26

25

0              127

1K

DIRECT BLOCKS   (4 - byte entries)

**FIG. 3**    LARGE XPT STRUCTURE GEOMETRY

PROCESSOR  144        MMU          140

146                  SYSTEM RAM  142

I/O CHANNEL  148
CONTROLLER

150

DISK          156        PC AT         152
                        COPROCESSOR

DISPLAY       158        OTHER I/O     154

**FIG. 8**

SEGMENT REGISTERS

SEG IDS

_30_

EFFECTIVE ADDRESS

_28_

_34_

_32_

_36_

_44_

_46_

_40_

_42_

_50_

_48_

_38_

XPT STRUCTURES

SEGMENT CONTROL BLOCKS

FIG. 4

**FIG. 5**

**FIG. 6**

**EFFECTIVE ADDRESS** 114

| 0 | 3 | 4 | | 31 |
|---|---|---|---|---|

126

120 **SEGMENT REGISTERS** 122 124

PAGE DISPLACEMENT

12 BITS FOR 4K PAGES

VIRTUAL PAGE INDEX

16 BITS FOR 4K PAGES

| P | R | I | SEG ID O | S | K |
|---|---|---|---|---|---|
| P | R | I | SEG ID 1 | S | K |
| | | | | | |
| P | R | I | SEG ID 15 | S | K |

116

SEGMENT IDENTIFIER →
12 BITS

128    130    132

| 0 | 12 | | 39 |
|---|---|---|---|
| SEGMENT ID _134_ | VIRTUAL PAGE INDEX _136_ | BYTE INDEX _138_ | |

_118_ **VIRTUAL ADDRESS**

**FIG. 7**

FIG. 9

EP 0 372 779 A2